# EUROPEAN PATENT APPLICATION

(11) **EP 4 707 762 A1**
(43) Date of publication of application: **11.03.2026**
(21) Application number: 25174988.3
(22) Date of filing: 08.05.2025
(51) Int. Cl.: G01M 3/16, G01M 3/18, G01M 3/40, F17D 5/06, F16L 9/12, F16L 9/19, H02K 5/20

(54) **A PIPING ASSEMBLY**

(30) Priority: 04.09.2024 TW 113209602 U
(71) Applicant: Cooler Master Co., Ltd., Taipei City 114065 (TW)
(72) Inventor: KUO, Chu-Yi, 114065 Taipei City (TW); CHEN, Chun-Hsien, 114065 Taipei City (TW)
(74) Representative: Grünecker Patent- und Rechtsanwälte PartG mbB

(57) **Abstract**

A piping assembly includes a tube having a first end and a second end, a first leak-detection wire and a second leak-detection wire that are embedded within the tube during a molding process and are electrically isolated from one another during normal operations , and a monitoring device that is electrically connected to first ends of the leak-detection wires to form an open circuit and is configured to monitor the open circuit for a change from an open state to a closed state. The open circuit changes to the closed state when a rupture occurs in the tube and liquids create a conductive path, forming a closed circuit through the first leak-detection wire, the second leak-detection wire, the monitoring device and the liquids.

## Description

### TECHNICAL FIELD

The present disclosure related to a type of piping assembly, and more particularly to a piping assembly that includes leak-detection wires.

### BACKGROUND

As demands of performance on modern electronic devices continue to increase, water-cooling technology has emerged as a solution to address the growing heat dissipation needs of those devices. However, water-cooling systems often face the issue of fluid leakage within the tube. To address this issue, leak detection wires are typically installed around the outer perimeter of the tube. However, such externally positioned leak-detection wires are prone to damage, rust, or corrosion. Therefore, R&D in this field are actively working to solve these challenges.

### SUMMARY

The present disclosure provides a piping assembly designed to minimize the risk of damage to leak-detection wires. These wires are embedded within a tube during the injection molding process and are electrically connected to a monitor. As a result, the exposure of the leak-detection wires to external forces and environmental factors is decreased, thereby extending their service life.

The invention is as defined in the appended claims. Aspects of the disclosure provide a piping assembly. The piping assembly includes a tube having a first end and a second end, a first leak-detection wire and a second leak-detection wire that are embedded within the tube during a molding process and are electrically isolated from one another during normal operations, and a monitoring device that is electrically connected to first ends of the first leak-detection wire and a second leak-detection wire to form an open circuit and is configured to monitor the open circuit for a change from an open state to a closed state, wherein the open circuit changes to the closed state when a rupture occurs in the tube and liquids create a conductive path, forming a closed circuit through the first leak-detection wire, the second leak-detection wire, the monitoring device and the liquids.

In one embodiment of the present disclosure, the monitoring device includes a positive terminal and a negative terminal, and the first ends of the of the first leak-detection wire and the second leak-detection wire are respectively connected to the positive terminal and the negative terminal of the monitoring device.

In one embodiment of the present disclosure, the tube includes an inner surface, a channel that is surrounded by the inner surface, and an outer surface that faces away from the inner surface.

In one embodiment of the present disclosure, the first leak-detection wire and second leak-detection wire are positioned between the inner surface and the outer surface.

In one embodiment of the present disclosure, each of the first leak-detection wire and the second leak-detection wire extends from the first end of the tube to the second end and surrounds the central axis of the tube.

In one embodiment of the present disclosure, each of the first leak-detection wire and the second leak-detection wire has a pitch between 2 mm and 20 mm.

In one embodiment of the present disclosure, the tube is made of a single or multiple materials, including but not limited to plastic one.

In one embodiment of the present disclosure, the first leak-detection wire and the second leak-detection wire extend in a helical pattern.

In one embodiment of the present disclosure, the first leak-detection wire and the second leak-detection wire extend longitudinally in the tube in a generally parallel manner to the tube's central axis.

Aspects of the disclosure provide a method of detecting leakage in a piping assembly according to another embodiment. The method includes forming a two-end tube that is configured to allow liquids to flow through, embedding a first leak-detection wire and a second leak-detection wire into the tube of the piping assembly during a molding process of forming the tube, connecting first ends of the first leak-detection wire and the second leak-detection wire to a monitoring device to form an open circuit, and monitoring the open circuit for a change from an open state to a closed state by the monitoring device. When the tube is undamaged, the first leak-detection wire and the second leak-detection wire remain electrically isolated, and the monitoring device reflects the open circuit, and when a rupture occurs in the tube, the liquids seep into the rupture site to create a conductive path and the monitoring device detects a closed circuit that is formed by the first leak-detection wire, the second leak-detection wire, the liquids and the monitoring device.

In one embodiment of the present disclosure, the monitoring device includes a positive terminal and a negative terminal, and the second ends of the of the first leak-detection wire and the second leak-detection wire are respectively connected to the positive terminal and the negative terminal of the monitoring device.

In one embodiment of the present disclosure, the tube includes an inner surface, a channel that is surrounded by the inner surface, and an outer surface that faces away from the inner surface.

In one embodiment of the present disclosure, the first leak-detection wire and second leak-detection wire are positioned between the inner surface and the outer surface.

In one embodiment of the present disclosure, each of the first leak-detection wire and the second leak-detection wire extends from the first end of the tube to the second end and surrounds the central axis of the tube.

In one embodiment of the present disclosure, each of the first leak-detection wire and the second leak-detection wire has a pitch between 2 mm and 20 mm.

In one embodiment of the present disclosure, the tube is made of a single or multiple materials, including but not limited to plastic one.

In one embodiment of the present disclosure, the first leak-detection wire and the second leak-detection wire extend in a helical pattern.

In one embodiment of the present disclosure, the first leak-detection wire and the second leak-detection wire extend longitudinally in the tube in a generally parallel manner to the tube's central axis.

### BRIEF DESCRIPTION OF THE DRAWINGS

Aspects of the present disclosure can be understood from the following detailed description when reading with the accompanying FIGS. It is noted that, in accordance with the standard practice in the industry, various features are not drawn to scale. In fact, the dimensions of the various features may be increased or reduced for clarity of discussion.
FIG. 1 is a perspective view of the piping assembly and monitoring device according to one embodiment of this invention.
FIG. 2 is a cross-sectional view of the piping assembly shown in FIG. 1.
FIG. 3 is a cross-sectional view showing a rupture in the tube from FIG. 2.
FIG. 4 is a perspective view of the piping assembly according to one embodiment of this invention.
FIG. 5 is a cross-sectional view of the piping assembly shown in FIG. 4.
FIG. 6 is a cross-sectional view of the piping assembly according to one embodiment of this invention.

### DETAILED DESCRIPTION

Detailed descriptions and technical contents of the present invention are illustrated below in conjunction with the accompanying drawings. However, it is to be understood that the descriptions and the accompanying drawings disclosed herein are merely illustrative and exemplary and not intended to limit the scope of the present invention.

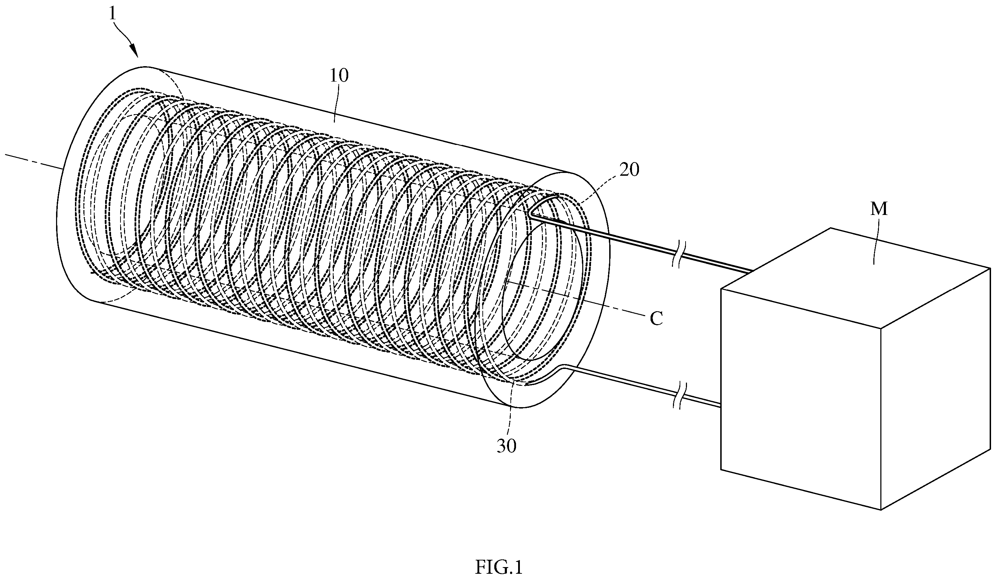

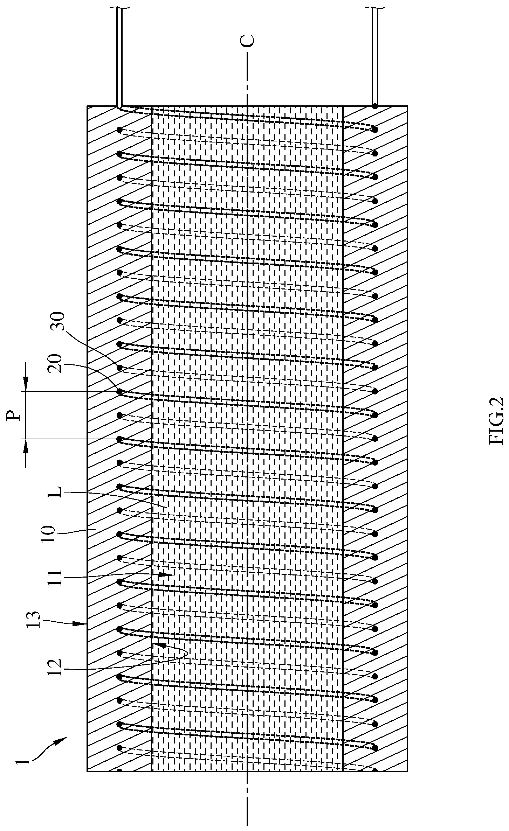

Referring to FIGS. 1 and 2., FIG. 1 is a perspective view of a piping assembly and monitoring device according to one embodiment of this invention and FIG. 2 is a cross-sectional view of the piping assembly shown in FIG. 1.

In one embodiment, the piping assembly 1 includes a tube 10 with a first end and a second end, a first leak-detection wire 20 and a second leak-detection wire 30. During the molding process of the tube 10, both the first leak-detection wire 20 and the second leak-detection wire 30 are at least partially embedded within the tube 10, and these leak-detection wires are separated from each other.

The tube 10 is made of a single or multiple materials including but not limited to plastic one, for example. The tube 10 includes a channel 11, an inner surface 12, and an outer surface 13. The channel 11 is surrounded by the inner surface 12 and serves as a conduit for a liquid L to flow through, while the outer surface 13 faces away from the inner surface 12. The first leak-detection wire 20 and the second leak-detection wire 30 are positioned at least partially between the inner surface 12 and the outer surface 13 of the tube 10 and extended from the first end of the tube 10 to the second end of the tube 10. Further, the first leak-detection wire 20 and the second leak-detection wire 30 are arranged in a helical pattern around the central axis C of the tube 10, with a pitch P of each of the first leak-detection wire 20 and the second leak-detection wire 30 between 2 mm and 20 mm.

In one embodiment, first ends of the first leak-detection wire 20 and the second leak-detection wire 30 are, for example, respectively connected to the positive and negative terminals of a monitoring device M. Because the first leak-detection wire 20 and the second leak-detection wire 30 are separated, the two leak-detection wires together with the monitoring device M form an open circuit.

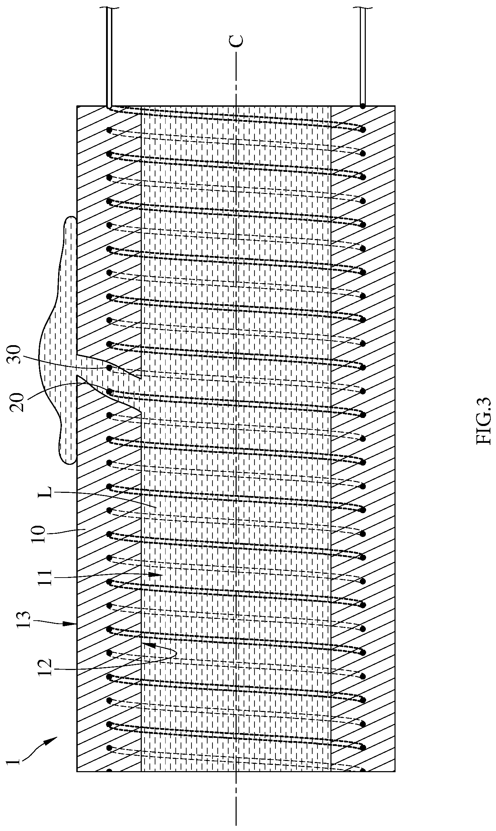

Referring to FIG. 3, FIG. 3 is a cross-sectional view showing a rupture in the tube from FIG. 2. When a rupture occurs in the tube 10, the liquids L within channel 11 seep into the rupture site and simultaneously contact the first leak-detection wire 20 and the second leak-detection wire 30, causing the first leak-detection wire 20 and the second leak-detection wire 30 to be electrically conductive. Because current travels through the liquids L, the first leak-detection wire 20, the liquids L, the second leak-detection wire 30, and the monitoring device M form a closed circuit. When the monitoring device M detects the formation of the closed circuit, it identifies a rupture in the tube 10 and sends a leak signal to the system to notify the technicians for maintenance.

In one embodiment, the design involves partially embedding the first leak-detection wire 20 and the second leak-detection wire 30 within the tube 10 during the molding process. This design helps minimize the risk of damage to the wires from external forces or environmental factors, thereby extending the lifespan of the leak-detection wires. Additionally, for maintenance purposes, only the exposed ends of the wires at both ends of the tube need to be inspected, which simplifies the maintenance process.

Because the first leak-detection wire 20 and the second leak-detection wire 30 are partially embedded within the tube 10, the wires are concealed and the overall appearance of the piping assembly 1 is better. This design is particularly suitable for environments where aesthetics is essential. Additionally, embedding the leak-detection wires within the tube reduces the possibility of inadvertent contact with people or objects, lowering safety hazards such as accidental touching.

Further, embedding the first leak-detection wire 20 and the second leak-detection wire 30 within the tube 10 effectively prevents direct contact with liquid L, lowering the risk of rust and corrosion. It should be noted that the first leak-detection wire 20 and the second leak-detection wire 30 do not need to be only partially embedded. In another embodiment, the leak-detection wires can be fully embedded within the tube. In this embodiment, additional wires connect the internal leak-detection wires to an external monitoring device.

In one embodiment, embedding the first leak-detection wire 20 and the second leak-detection wire 30 within the tube 10 during the molding process integrates them into the tube 10 after molding, reducing the need for additional assembly steps and hence increasing the production efficiency of the piping assembly 1.

In one embodiment, the helical arrangement of the first leak-detection wire 20 and the second leak-detection wire 30, which extend from one end of the tube 10 to the other, allows liquid L to contact the wires more easily when the tube 10 ruptures, thereby improving the sensitivity of leak-detection. Additionally, adjusting the pitch P of each wire to be between 2 mm and 20 mm further improves the leak-detection sensitivity.

It should be noted that the number of the leak-detection wires 20 and 30 is not limited to two. In another embodiment, there can be more than two leak-detection wires, ultimately converging into 2N output wires, where N is a natural number.

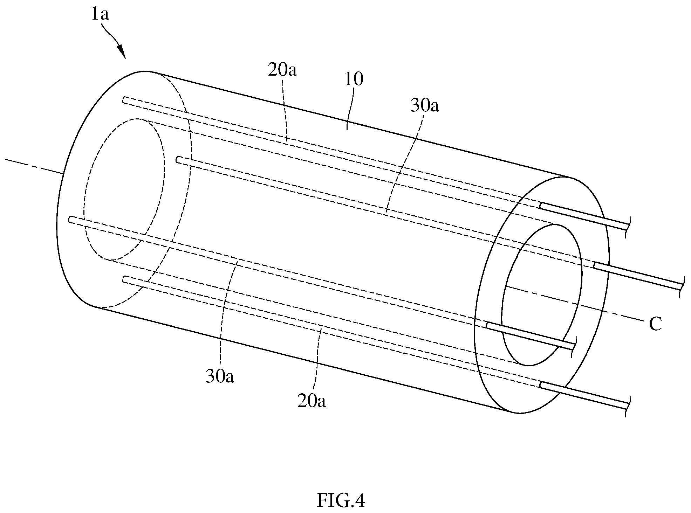

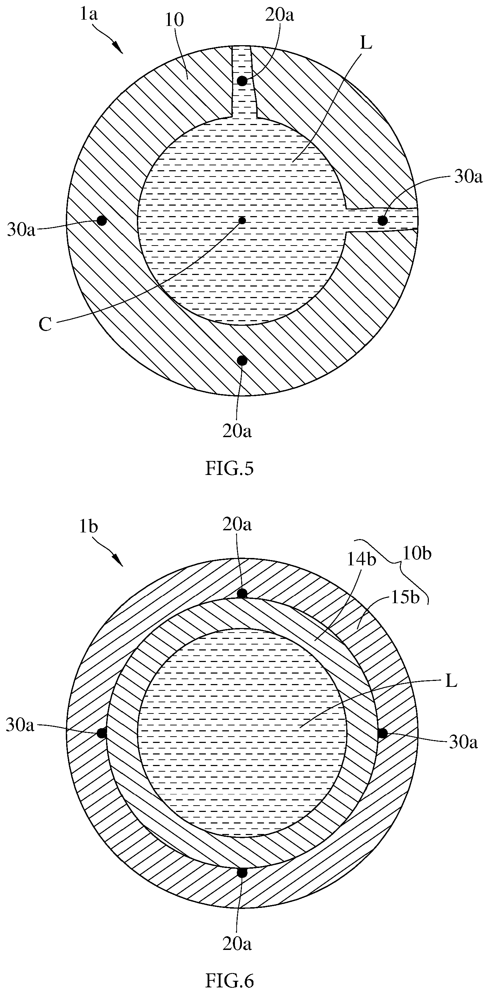

Referring to FIG. 4 and FIG.5. FIG. 4 is a perspective view of the piping assembly according to one embodiment of this invention. FIG. 5 is a cross-sectional view of the piping assembly shown in FIG. 4. The piping assembly 1a in this embodiment is similar to the piping assembly 1 described above, so the differences will be described, and the similarities will not be repeated.

In one embodiment, the piping assembly 1a includes two first leak-detection wires 20a and two second leak-detection wires 30a, which are elongated and positioned parallel to the central axis C of the tube 10. The four leak-detection wires are evenly distributed circumferentially around the inside of the tube 10. For example, the two first leak-detection wires 20a are located on the upper and lower sides of the tube 10, while the two second leak-detection wires 30a are positioned on the left and right sides. First ends of the two first leak-detection wires 20a and the two second leak-detection wires 30a are respectively connected to the positive terminal and the negative the negative terminal of a monitoring device (as shown in Figure 1).

When the tube 10 ruptures, it allows liquids L inside the tube to contact one of the first leak-detection wires 20a and one of the second leak-detection wires 30a (e.g., those on the upper and right sides), causing the first leak-detection wires 20a and the second leak-detection wires 30a to be electrically conductive. The current travels through the liquids L, one of the first two leak-detection wires 20a, the liquids L, one of the second leak-detection wires 30a, and the monitoring device, forming a closed circuit. When the monitoring device detects the formation of the closed circuit, the monitoring device will send a leak signal to the system, notifying the technicians of the need for maintenance.

It should be noted that the number of leak-detection wires 20a and 30a is not limited to four. In another embodiment, the number of leak-detection wires may be two and positioned at various circumferential locations around the tube based as required.

Referring to FIG. 6. FIG. 6 is a cross-sectional view of the piping assembly according to one embodiment of this invention. The piping assembly 1b in this embodiment is similar to the piping assembly described above, with the primary difference being the structure of the tube. Therefore, the difference between the piping assembly 1b and 1a will be described, and the similarities will not be repeated.

In one embodiment, the tube 10b includes an inner layer 14b and an outer layer 15b that surrounds the inner layer 14b. Both the inner layer 14b and the outer layer 15b can be made of materials that are either water-absorbent or waterproof, but the embodiment is not limited thereto. In another embodiment, the inner and outer layers may be made of other suitable materials. The first leak-detection wires 20a and the second leak-detection wires 30a are embedded within the outer layer 15b. As shown in FIG. 6, when the tube 10b is intact and the inner layer 14b is waterproof, the inner layer 14b prevents the liquid L within the tube 10b from contacting the first leak-detection wires 20a and the second leak-detection wires 30a, ensuring that the first leak-detection wires 20a and the second leak-detection wires 30a remain electrically isolated. In the event of a rupture (not shown) occurs in the tube 10b, if either the inner layer 14b or the outer layer 15b is water-absorbent, the liquid can quickly diffuse through the absorbent layer, thereby contacting at least two of the first and second leak-detection wires 20a and 30a to render these wires to be electrically conductive and so enable rapid detection of the rupture. Please note that the tube 10b in this embodiment can replace the tube10 in the other embodiment.

Configuring the leak-detection wires within the disclosed piping assembly, which are partially embedded in the tube during the molding process, significantly minimize the risk of damage from external forces and environmental factors. The configuration helps extend the lifespan of the leak-detection wires. Further, when maintenance is necessary, only the exposed ends of these wires at each end of the tube need to be inspected, simplifying the maintenance process.

Additionally, the leak-detection wires are partially embedded within the tube, which keeps them concealed and enhances the aesthetics of the entire piping assembly . The design is particularly well-suited for applications where a polished appearance is desired. By embedding the leak-detection wires, the risk of inadvertent contact with people or objects is minimized, thereby reducing potential safety hazards. Embedding the leak-detection wires also effectively prevents contact with liquids, lowering the risk of rust or corrosion. By embedding the leak-detection wires within the tube during the molding process, the tube and leak-detection wires form a single integrated unit, eliminating the need for additional assembly steps and improving the production efficiency of the piping assembly.

Extending the leak-detection wires from one end of the tube to the other in a helical or elongated arrangement maximizes the possibility of contact with liquid in case of a rupture, thereby improving the sensitivity of leak detection.

The tube includes an inner layer and an outer layer, both of which can be made of materials that are either waterproof or water-absorbent materials. The leak-detection wires are positioned within the outer layer. When the tube body is intact and the inner layer is waterproof, the waterproof inner layer prevents the liquid inside the tube body from coming into contact with the leak-detection wires, ensuring that these leak-detection wires remain electrically isolated. However, in the event of a tube body rupture, if either the inner layer or the outer layer is water-absorbent, the liquid can quickly spread through the water-absorbent layer, rendering at least two leak-detection wires to become electrically conductive.

Therefore, embodiments disclosed herein are well adapted to attain the ends and advantages mentioned as well as those that are inherent therein. The particular embodiments disclosed above are illustrative only, as the embodiments disclosed may be modified and practiced in different but equivalent manners apparent to those of ordinary skill in the relevant art having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope and spirit of the present disclosure. Of course, the disclosed embodiments are merely exemplary embodiments and that various modifications can be made without departing from the spirit and scope of the disclosure. Further, it should be understood that various aspects of the embodiment are not mutually exclusive of each other and can be combined as desired by a person of ordinary skill in the art as a matter of design choices.

The embodiments illustratively disclosed herein suitably may be practiced in the absence of any element that is not specifically disclosed herein and/or any optional element disclosed herein. While compositions and methods are described in terms of "comprising," "containing," or "including" various components or steps, the compositions and methods can also "consist essentially of" or "consist of" the various components and steps. All numbers and ranges disclosed above may vary by some number. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the elements that it introduces.

## Claims

1. A piping assembly (1, 1a), comprising:
a tube (10) having a first end and a second end;
a first leak-detection wire (20, 20a) and a second leak-detection wire (30, 30a) that are embedded within the tube (10) during a molding process and are electrically isolated from one another during normal operations; and
a monitoring device (M) that is electrically connected to first ends of the first leak-detection wire (20, 20a) and the second leak-detection wire (30, 30a) to form an open circuit and is configured to monitor the open circuit for a change from an open state to a closed state,
wherein
the open circuit changes to the closed state when a rupture occurs in the tube (10) and liquids (L) create a conductive path, forming a closed circuit through the first leak-detection wire (20, 20a), the second leak-detection wire (30, 30a), the monitoring device (M) and the liquids (L).

2. The piping assembly (1) of claim 1, wherein the monitoring device (M) includes a positive terminal and a negative terminal, and the first ends of the first leak-detection wire (20) and the second leak-detection wire (30) are respectively connected to the positive terminal and the negative terminal of the monitoring device (M).

3. The piping assembly (1) of claim 1 or 2, wherein the tube (10) includes an inner surface (12), a channel (11) that is surrounded by the inner surface (12), and an outer surface (13) that faces away from the inner surface (12).

4. The piping assembly (1) of claim 3, wherein the first leak-detection wire (20) and second leak-detection wire (30) are positioned between the inner surface (12) and the outer surface (13).

5. The piping assembly (1) of one of claims 1 to 4, wherein each of the first leak-detection wire (20) and the second leak-detection wire (30) extends from the first end of the tube (10) to the second end and surrounds a central axis (C) of the tube (10).

6. The piping assembly (1) of claim 5, wherein each of the first leak-detection wire (20) and the second leak-detection wire (30) has a pitch (P) between 2 mm and 20 mm.

7. The piping assembly (1, 1a) of one of claims 1 to 6, wherein the tube (10) is made of a single or multiple materials, including but not limited to plastic one.

8. The piping assembly (1) of one of claims 1 to 7, wherein the first leak-detection wire (20) and the second leak-detection wire (30) are extending in a helical pattern.

9. The piping assembly (1a) of one of claims 1 to 4, wherein the first leak-detection wire (20a) and the second leak-detection wire (30a) extend longitudinally in the tube (10a) in a generally parallel manner to a tube's central axis (C).

10. A method of detecting leakage in a piping assembly (1, 1a), the method comprising:
forming a two-end tube (10) that is configured to allow liquids (L) to flow through;
embedding a first leak-detection wire (20, 20a) and a second leak-detection wire (30, 30a) into the tube (10) of the piping assembly (1, 1a) during a molding process of forming the tube (10);
connecting first ends of the first leak-detection wire (20, 20a) and the second leak-detection wire (30, 30a) to a monitoring device (M) to form an open circuit; and
monitoring the open circuit for a change from an open state to a closed state by the monitoring device (M), wherein:
when the tube (10) is undamaged, the first leak-detection wire (20, 20a) and the second leak-detection wire (30, 30a) remain electrically isolated, and the monitoring device (M) reflects the open circuit, and
when a rupture occurs in the tube (10), the liquids (L) seep into the rupture site to create a conductive path and the monitoring device (M) detects a closed circuit that is formed by the first leak-detection wire (20, 20a), the second leak-detection wire (30, 30a), the liquids (L) and the monitoring device (M).

11. The method of claim 10, wherein the monitoring device (M) includes a positive terminal and a negative terminal, and the first ends of the first leak-detection wire (20) and the second leak-detection wire (30) are respectively connected to the positive terminal and the negative terminal of the monitoring device (M).

12. The method of claim 10 or 11, wherein the tube (10) includes an inner surface (12), a channel (11) that is surrounded by the inner surface (12), and an outer surface (13) that faces away from the inner surface (12).

13. The method of claim 12, wherein the first leak-detection wire (20) and second leak-detection wire (30) are positioned between the inner surface (12) and the outer surface (13).

14. The method of one of claims 10 to 13, wherein each of the first leak-detection wire (20) and the second leak-detection wire (30) extends from one end of the tube (10) to the other end of the tube (10) and surrounds a central axis (C) of the tube (10).

15. The method of claim 14, wherein each of the first leak-detection wire (20) and the second leak-detection wire (30) has a pitch (P) between 2 mm and 20 mm.

16. The method of one of claims 10 to 15, wherein the tube (10) is made of a single or multiple materials, including but not limited to plastic one.

17. The method of one of claims 10 to 16, wherein the first leak-detection wire (20) and the second leak-detection wire (30) are extending in a helical pattern.

18. The method of one of claims 10 to 13, wherein the first leak-detection wire (20a) and the second leak-detection wire (30a) extend longitudinally in the tube (10a) in a generally parallel manner to a tube's central axis (C).
